# EUROPÄISCHE PATENTSCHRIFT

(11) **EP 3 305 575 B1**
(45) Veröffentlichungstag und Bekanntmachung des Hinweises auf die Patenterteilung: **15.01.2020**
(21) Anmeldenummer: 17193735.2
(22) Anmeldetag: 28.09.2017
(51) Int. Cl.: B60K 15/03

(54) **BETRIEBSMITTELBEHÄLTER FÜR EIN KRAFTFAHRZEUG SOWIE VERFAHREN ZUM BETREIBEN EINES BETRIEBSMITTELBEHÄLTERS**
SUPPLY CONTAINER FOR A MOTOR VEHICLE AND METHOD FOR OPERATING SAME
RÉSERVOIR DE CARBURANT POUR UN VÉHICULE AUTOMOBILE ET PROCÉDÉ DE FONCTIONNEMENT D'UN RÉSERVOIR DE CARBURANT

(30) Priorität: 06.10.2016 DE 102016219386
(43) Veröffentlichungstag der Anmeldung: 11.04.2018
(73) Patentinhaber: AUDI AG, 85045 Ingolstadt (DE)
(72) Erfinder: Kräuter, Thomas, 85080 Gaimersheim (DE)

(56) Entgegenhaltungen:
- DE-A1- 19 938 427
- JP-B2- 3 362 540
- US-A1- 2015 151 629

## Beschreibung

Die Erfindung betrifft einen Betriebsmittelbehälter für ein Kraftfahrzeug zur Zwischenspeicherung eines flüssigen Betriebsmittels, der ein von einem Behältergehäuse begrenztes, der Aufnahme des Betriebsmittels dienendes Behältervolumen und eine Entnahmestelle zur Entnahme des Betriebsmittels aus dem Betriebsmittelbehälter aufweist, wobei das Behältergehäuse einen Gehäuseboden, Seitenwände und ein Gehäusedach aufweist, und wobei die Entnahmestelle an einem das Behältervolumen gemeinsam mit dem Behältergehäuse begrenzenden Behälterboden des Betriebsmittelbehälters angeordnet ist, und wobei der Behälterboden wenigstens bereichsweise von einer flexiblen Membran gebildet ist, wobei ein von der Entnahmestelle beabstandeter erster Bereich der Membran gegenüber einem an der Entnahmestelle ortsfest bezüglich des Behältergehäuses angeordneten zweiten Bereich der Membran verlagerbar ist. Die Erfindung betrifft weiterhin ein Verfahren zum Betreiben eines Betriebsmittelbehälters.

Der Betriebsmittelbehälter dient der Zwischenspeicherung beziehungsweise Aufbewahrung des Betriebsmittels. Das Betriebsmittel dient dem Betreiben des Kraftfahrzeugs und liegt in Form einer Flüssigkeit vor. Als Betriebsmittel kann beispielsweise ein Kraftstoff, ein Schmiermittel oder dergleichen verwendet werden. Der Betriebsmittelbehälter dient vorzugsweise der drucklosen Zwischenspeicherung des Betriebsmittels. Das bedeutet, dass das in dem Betriebsmittelbehälter zwischengespeicherte Betriebsmittel bei einem Druck vorliegt, welcher zumindest näherungsweise einem Umgebungsdruck entspricht oder allenfalls geringfügig von diesem abweicht, insbesondere höher oder niedriger ist. Beispielsweise weicht der Druck des Betriebsmittel in dem Betriebsmittelbehälter um höchstens 5 %, höchstens 10 %, höchstens 20 %, höchstens 25 %, höchstens 30 %, höchstens 40 % oder höchstens 50 % von dem Umgebungsdruck ab, welcher außerhalb des Betriebsmittelbehälters vorliegt.

Der Betriebsmittelbehälter weist das Behältervolumen auf, in welchem das Betriebsmittel aufgenommen werden kann. Das Behältervolumen wird von dem Behältergehäuse und dem Behälterboden des Betriebsmittelbehälters begrenzt. Das Betriebsmittel ist an einer Entnahmestelle aus dem Betriebsmittelbehälter beziehungsweise dem Behältervolumen entnehmbar. Die Entnahmestelle liegt beispielsweise als Entnahmeöffnung vor oder wird von einer solchen gebildet, durch welche das Betriebsmittel aus dem Behältervolumen austreten kann. Um ein zuverlässiges Entnehmen des Betriebsmittels aus dem Betriebsmittelbehälter zu ermöglichen, ist die Entnahmestelle an dem Behälterboden des Betriebsmittelbehälters angeordnet, sodass das Betriebsmittel durch Schwerkrafteinfluss in Richtung der Entnahmestelle gedrängt wird. Hierzu bildet der Behälterboden des Betriebsmittelbehälters in Einbaulage des Betriebsmittelbehälters in geodätischer Hinsicht eine Unterseite des Behältervolumens.

Aus dem Stand der Technik ist beispielsweise die Druckschrift US 2015/0151629 A1 bekannt. Diese beschreibt eine Kraftstoffbevorratungseinrichtung mit einem Kraftstofftank, der flüssigen Kraftstoff speichert, der durch eine Einfüllöffnung eines Kraftfahrzeugs eingefüllt wird. Der Kraftstofftank ist von einer impermeablen Folie in eine Primärkraftstoffkammer und eine Sekundärkraftstoffkammern aufgeteilt.

Es ist nun Aufgabe der Erfindung, einen Betriebsmittelbehälter für ein Kraftfahrzeug vorzuschlagen, welche gegenüber bekannten Betriebsmittelbehältern Vorteile aufweist, insbesondere eine zuverlässige Entnahme des Betriebsmittels aus dem Betriebsmittelbehälter sicherstellt.

Dies wird erfindungsgemäß mit einem Betriebsmittelbehälter mit den Merkmalen des Anspruchs 1 erreicht. Dabei ist vorgesehen, dass zur Verlagerung des ersten Bereichs der Membran eine elektrisch betriebene Antriebseinrichtung vorliegt.

Vorstehend wurde bereits erläutert, dass der Behälterboden des Betriebsmittelbehälters das Behältervolumen gemeinsam mit dem Behältergehäuse begrenzt. Beispielsweise bildet das Behältergehäuse dabei in Einbaulage des Betriebsmittelbehälters Seitenwände des Behältervolumens aus, welche von dem Behälterboden des Betriebsmittelbehälters ausgehen und sich von diesem fort erstrecken, nämlich in Richtung eines Behälterdachs des Betriebsmittelbehälters. Das Behälterdach kann ebenso wie die Seitenwände von dem Behältergehäuse gebildet sein.

Um die zuverlässige Entnahme des Betriebsmittels aus dem Betriebsmittelbehälter sicherzustellen, ist der Behälterboden wenigstens bereichsweise, insbesondere vollständig, von der flexiblen Membran gebildet. Die Membran kann dabei in dem Behältergehäuse angeordnet sein, welches insoweit beispielsweise einen Gehäuseboden, das dem Gehäuseboden gegenüberliegende Behälterdach sowie die Seitenwände aufweist, über welche der Gehäuseboden und das Behälterdach miteinander verbunden sind. Die Membran ist nun in wenigstens einer Stellung zumindest bereichsweise von dem Gehäuseboden beabstandet angeordnet.

Die flexible Membran weist wenigstens zwei Bereiche, nämlich den ersten Bereich und den zweiten Bereich, auf. Die beiden Bereiche sind gegeneinander verlagerbar, insbesondere in Einbaulage in vertikaler Richtung. Der erste Bereich der Membran ist dabei von der Entnahmestelle beabstandet angeordnet, während der zweite Bereich an der Entnahmestelle vorliegt. In anderen Worten ist der zweite Bereich der Membran näher an der Entnahmestelle angeordnet als der erste Bereich. Der erste Bereich ist nun derart verlagerbar, dass in wenigstens einer Stellung der Schwerkrafteinfluss auf das in dem Behältervolumen befindliche Betriebsmittel größer ist als in einer anderen Stellung, sodass das Betriebsmittel durch den Schwerkrafteinfluss in Richtung der Entnahmestelle gedrängt wird.

Beispielsweise ist die Membran derart ausgestattet, dass in der wenigstens einen Stellung des ersten Bereichs eine Trichterwirkung vorliegt, sodass also die Membran nach Art eines Trichters die Entnahmestelle umgebend angeordnet ist. In jedem Fall ist die Membran beziehungsweise ihr erster Bereich derart gegenüber dem zweiten Bereich verlagerbar, dass sich in wenigstens einer Stellung der Membran beziehungsweise ihres ersten Bereichs eine in Richtung der Entnahmestelle geneigte Schrägfläche ergibt, entlang welcher das Betriebsmittel in Richtung der Entnahmestelle geleitet wird. Die Membran besteht vorzugsweise aus einem flexiblen Material, welches weiter bevorzugt für das Betriebsmittel impermeabel ist. Die Membran trennt insoweit das Behältervolumen für das Betriebsmittel gegenüber einem anderen Bereich des Behältergehäuses ab, welcher auf der dem Behältervolumen abgewandten Seite der Membran vorliegt.

Eine derartige Ausgestaltung des Betriebsmittelbehälters ermöglicht eine zuverlässige Entnahme des Betriebsmittels aus dem Betriebsmittelbehälter beziehungsweise dem Behältervolumen in zahlreichen Betriebssituationen und/oder bei zahlreichen unterschiedlichen Füllständen des Betriebsmittelbehälters, insbesondere auch bei nahezu leerem Betriebsmittelbehälter. In letzterem Fall wird durch entsprechende Anordnung beziehungsweise Ausrichtung der Membran das in dem Behältervolumen verbleibende Betriebsmittel hin zu der Entnahmestelle gefördert, an welcher es aus dem Betriebsmittelbehälter beziehungsweise dem Behältervolumen entnommen werden kann.

Die Entnahmestelle liegt beispielsweise, wie vorstehend bereits dargestellt, als Entnahmeöffnung vor. Die Entnahmeöffnung kann an einer Betriebsmittelleitung vorliegen, welche mit einer Betriebsmittelfördereinrichtung strömungsverbunden ist. Selbstverständlich kann sie jedoch alternativ auch an der Betriebsmittelfördereinrichtung selbst vorliegen, welche zu diesem Zweck zumindest teilweise in dem Behältervolumen angeordnet ist. Die Betriebsmittelfördereinrichtung liegt beispielsweise in Form einer Kraftstoffpumpe oder Schmiermittelpumpe vor.

Im Rahmen einer weiteren Ausgestaltung der Erfindung ist vorgesehen, dass der zweite Bereich der Membran die Entnahmestelle einfasst und den geodätisch am tiefsten liegenden Bereich des Behälterbodens bildet. Der zweite Bereich der Membran soll die Entnahmestelle umgebend angeordnet sein. Beispielsweise ist die Entnahmestelle beziehungsweise die Entnahmeöffnung die Membran durchgreifend ausgebildet, sodass die Entnahmestelle beziehungsweise Entnahmeöffnung von einem durchgehenden Rand eingefasst ist, welcher von der Membran ausgebildet ist. Die Entnahmestelle beziehungsweise Entnahmeöffnung liegt insoweit als randgeschlossene Öffnung in der Membran vor.

Alternativ kann die Entnahmeöffnung auch oberhalb der Membran vorliegen, bevorzugt unmittelbar an die Membran angrenzen, jedoch alternativ auch beabstandet von ihr. In letzterem Fall ist beispielsweise die Entnahmestelle an der Betriebsmittelfördereinrichtung ausgebildet, welche in dem Behältervolumen angeordnet ist, zumindest teilweise oder vollständig. Beispielsweise ist die Betriebsmittelfördereinrichtung derart in dem Behältervolumen angeordnet, dass der zweite Bereich der Membran unverlagerbar beziehungsweise ortsfest in dem Behältergehäuse gehalten ist. Insbesondere ist der zweite Bereich der Membran von der Betriebsmittelfördereinrichtung in Richtung des Behältergehäuses gedrängt beziehungsweise an diesem gehalten. Beispielsweise ist der zweite Bereich der Membran zwischen dem Behältergehäuse, insbesondere dem Gehäuseboden, und der Betriebsmittelfördereinrichtung klemmend gehalten.

Bevorzugt ist es jedoch in jedem Fall vorgesehen, dass der zweite Bereich den geodätisch am tiefsten liegenden Bereich des Behälterbodens bildet, nämlich in der Einbaulage des Betriebsmittelbehälters, sodass das in dem Behältervolumen befindliche Betriebsmittel stets durch Schwerkrafteinfluss in Richtung der Entnahmestelle gedrängt wird.

Eine bevorzugte weitere Ausgestaltung der Erfindung sieht vor, dass der zweite Bereich der Membran bezüglich des Behältergehäuses ortsfest angeordnet ist, insbesondere an einem Gehäuseboden des Behältergehäuses befestigt ist. Der zweite Bereich der Membran soll insoweit nicht verlagerbar sein. Die Verlagerung der beiden Bereiche der Membran gegeneinander wird allein durch eine Verlagerung des ersten Bereichs der Membran erzielt. Vorstehend wurde bereits erläutert, dass bevorzugt der zweite Bereich an dem Gehäuseboden des Behältergehäuses befestigt ist. Beispielsweise wird er von der Betriebsmittelfördereinrichtung in Richtung des Gehäusebodens beziehungsweise an diesen gedrängt.

Eine Weiterbildung der Erfindung sieht vor, dass der erste Bereich der Membran bezüglich des Behältergehäuses verlagerbar ist, insbesondere verlagerbar an einer Seitenwand des Behältergehäuses gelagert ist. Die Verlagerung des ersten Bereichs soll dabei derart möglich sein, dass der das Betriebsmittel in Richtung der Entnahmestelle drängende Schwerkrafteinfluss in unterschiedlichen Stellungen unterschiedlich groß ist. Beispielsweise ist der erste Bereich an der Seitenwand beziehungsweise an Seitenwänden des Behältergehäuses gelagert. Hierzu kann beispielsweise die Seitenwand eine Führungseinrichtung zur Führung der Membran beziehungsweise des ersten Bereichs der Membran aufweisen.

Die Erfindung sieht vor, dass zur Verlagerung des ersten Bereichs der Membran eine Antriebseinrichtung vorliegt. Die Antriebseinrichtung ist eine elektrisch betriebene Antriebseinrichtung, weist also beispielsweise einen Elektromotor oder dergleichen auf.
Eine bevorzugte Ausgestaltung der Erfindung sieht vor, dass die elektrisch angetriebene Antriebseinrichtung als Spindeltrieb vorliegt. Die Verlagerung des ersten Bereichs der Membran erfolgt somit mithilfe des Spindeltriebs, welcher elektrisch angetrieben ist, also beispielsweise mit einem Elektromotor wirkverbunden ist.

Im Rahmen einer weiteren Ausgestaltung der Erfindung kann vorgesehen sein, dass ein von der Entnahmestelle beabstandeter, durchgehender Außenrand der Membran den ersten Bereich der Membran bildet. Der Außenrand liegt als durchgehender Rand der Membran vor. Er ist von der Entnahmestelle beabstandet, insbesondere durchgehend beabstandet. Vorzugsweise ist der Außenrand durchgehend an der Seitenwand beziehungsweise den Seitenwänden des Behältergehäuses verlagerbar gelagert. Der Außenrand ist insoweit bezüglich des zweiten Bereichs verlagerbar und stellt insoweit den ersten Bereich der Membran dar.

Eine weitere Ausgestaltung der Erfindung sieht vor, dass der Außenrand durchgehend in einer gedachten Ebene liegt, die in einer ersten Stellung des ersten Bereichs einen ersten Abstand von der Entnahmestelle und in einer zweiten Stellung einen größeren zweiten Abstand aufweist. Das bedeutet, dass die Verlagerung des ersten Bereichs der Membran durch eine Verlagerung des durchgehenden Außenrands erfolgt. Es ist also nicht lediglich eine teilweise Verlagerung des Außenrands vorgesehen. Der Außenrand liegt in der gedachten Ebene, welche in unterschiedlichen Stellungen des ersten Bereichs unterschiedliche Abstände von der Entnahmestelle beziehungsweise dem zweiten Bereich der Membran aufweist. Der Abstand liegt vorzugsweise in vertikaler Richtung vor, insbesondere im Schnitt durch den Betriebsmittelbehälter gesehen.

Schließlich kann im Rahmen einer weiteren vorteilhaften Ausgestaltung der Erfindung vorgesehen sein, dass das Behältervolumen in der ersten Stellung größer ist als in der zweiten Stellung. In der zweiten Stellung ist der Behälterboden stärker angewinkelt, weist also bezüglich der gedachten Ebene eine größere Steigung in Richtung der Entnahmestelle auf. Entsprechend ist das in dem Behältervolumen vorliegende Betriebsmittel in Richtung der Entnahmestelle drängende Schwerkrafteinfluss in der zweiten Stellung größer als in der ersten Stellung. Dies bedeutet jedoch auch, dass der Außenrand in der zweiten Stellung näher an dem Gehäusedach liegt als in der ersten Stellung, sodass insgesamt das Behältervolumen in der zweiten Stellung kleiner ist als in der ersten Stellung, auch wenn das Volumen des Behältergehäuses selbst gleich bleibt.

Die Erfindung betrifft weiterhin ein Verfahren zum Betreiben eines Betriebsmittelbehälters für ein Kraftfahrzeug zur Zwischenspeicherung eines flüssigen Betriebsmittels, insbesondere eines Betriebsmittelbehälters gemäß den vorstehenden Ausführungen, wobei der Betriebsmittelbehälter ein von einem Behältergehäuse begrenztes, der Aufnahme des Betriebsmittels dienendes Behältervolumen und eine Entnahmestelle zur Entnahme des Betriebsmittels aus dem Betriebsmittelbehälter aufweist, wobei das Behältergehäuse einen Gehäuseboden, Seitenwände und ein Gehäusedach aufweist, und wobei die Entnahmestelle an einem das Behältervolumen gemeinsam mit dem Behältergehäuse begrenzenden Behälterboden des Betriebsmittelbehälters angeordnet ist. Dabei ist vorgesehen, dass der Behälterboden wenigstens bereichsweise von einer in dem Behältergehäuse angeordneten, flexiblen und für das Betriebsmittel impermeablen Membran gebildet ist, wobei ein von der Entnahmestelle beabstandeter erste Bereich der Membran gegenüber einem an der Entnahmestelle ortsfest bezüglich des Behältergehäuses angeordneten zweiten Bereich der Membran verlagert werden kann. Weiterhin ist vorgesehen, dass zur Verlagerung des ersten Bereichs der Membran eine elektrisch betriebene Antriebseinrichtung vorliegt.

Auf die Vorteile einer derartigen Vorgehensweise beziehungsweise einer derartigen Ausgestaltung des Betriebsmittelbehälters wurde bereits hingewiesen. Sowohl der Betriebsmittelbehälter als auch das Verfahren zu seinem Betreiben können gemäß den vorstehenden Ausführungen weitergebildet sein, sodass insoweit auf diese verwiesen wird.

Beispielsweise ist der erste Bereich zwischen einer ersten Stellung und einer zweiten Stellung verlagerbar, wobei die erste Stellung und die zweite Stellung jeweils als Endstellung für den ersten Bereich vorliegen. Es kann nun vorgesehen sein, dass der erste Bereich umso weiter aus der ersten Stellung in Richtung der zweiten Stellung ausgelenkt wird, je geringer der Füllstand des Betriebsmittelbehälters und/oder je stärker eine Neigung des Kraftfahrzeugs und mithin des Betriebsmittelbehälters bezüglich einer horizontalen Ebene, welche senkrecht auf dem Schwerkraftvektor steht, ist. Bezug nehmend auf die vorstehend beschriebene Trichterform der Membran in der zweiten Stellung soll also die Trichterwirkung der Membran umso stärker ausgeprägt sein, je weniger Betriebsmittel in dem Betriebsmittelbehälter beziehungsweise dem Behältervolumen vorliegt und/oder je stärker das Kraftfahrzeug beziehungsweise der Betriebsmittelbehälter geneigt ist.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Querschnittsdarstellung eines Betriebsmittelbehälters für ein Kraftfahrzeug, wobei ein erster Bereich einer einen Behälterboden eines Behältervolumens bildenden flexiblen Membran in einer ersten Stellung angeordnet ist, sowie
- Figur 2: eine schematische Querschnittsdarstellung des Betriebsmittelbehälters, wobei der erste Bereich in einer von der ersten Stellung verschiedenen zweiten Stellung vorliegt.

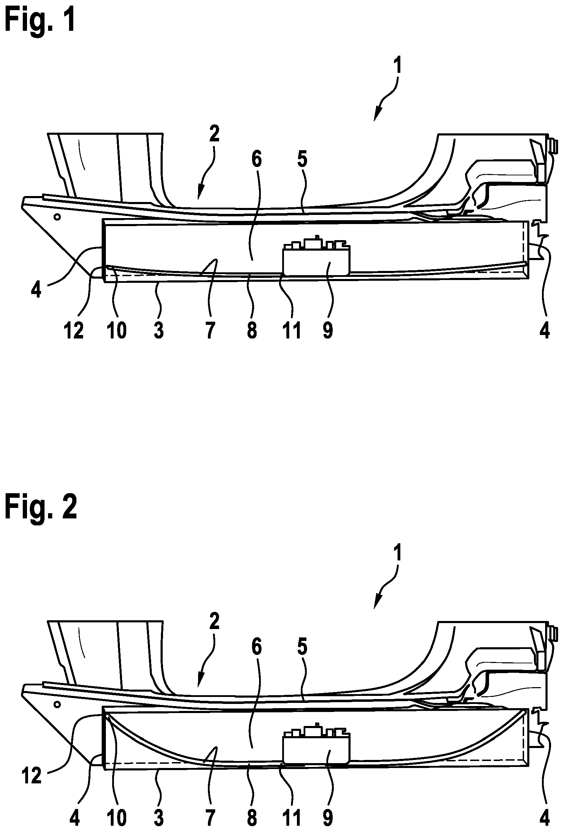

Die Figur 1 zeigt eine schematische Querschnittsdarstellung eines Betriebsmittelbehälters 1 für ein Kraftfahrzeug. Der Betriebsmittelbehälter 1 dient zur Zwischenspeicherung eines flüssigen Betriebsmittels. Der Betriebsmittelbehälter 1 weist ein Behältergehäuse 2 auf, welches insbesondere einen Gehäuseboden 3, Seitenwände 4 und ein Gehäusedach 5 aufweist. In dem Behältergehäuse 2, also zwischen dem Gehäuseboden 3, dem Gehäusedach 5 sowie den Seitenwänden 4 liegt ein Behältervolumen 6 vor. Das Behältervolumen 6 wird zumindest bereichsweise von den Seitenwänden 4 und einem Behälterboden 7 begrenzt, welcher zumindest bereichsweise von einer flexiblen Membran 8 gebildet ist. Zusätzlich kann das Behältervolumen 6 auf der dem Behälterboden 7 abgewandten Seite von dem Gehäusedach 5 begrenzt sein.

In dem Behältergehäuse 2, insbesondere in dem Behältervolumen 6, kann zudem eine Betriebsmittelfördereinrichtung 9, hier lediglich schematisch dargestellt, angeordnet sein. Beispielsweise liegt die Betriebsmittelfördereinrichtung 9 zumindest im Querschnitt gesehen beabstandet von den Seitenwänden 4 vor. Vorzugsweise ist die Betriebsmittelfördereinrichtung 9 jedoch von allen Seitenwänden 4 beabstandet angeordnet. An der Betriebsmittelfördereinrichtung 9 liegt eine hier nicht dargestellte Entnahmestelle zur Entnahme des Betriebsmittels aus dem Betriebsmittelbehälter 1 beziehungsweise dem Behältervolumen 6 vor. Die Entnahmestelle ist beispielsweise als Entnahmeöffnung ausgestaltet, durch welche die Betriebsmittelfördereinrichtung 9 das Betriebsmittel aus dem Behältervolumen 6 ansaugen kann. Es ist erkennbar, dass die Membran 8 zwischen der Betriebsmittelfördereinrichtung 9 und dem Gehäuseboden 3 vorliegt. Insoweit kann es vorgesehen sein, dass die Membran 8 klemmend zwischen der Betriebsmittelfördereinrichtung 9 und dem Gehäuseboden 3 gehalten ist. Die Membran 8 besteht aus einem flexiblen Material und ist zumindest für das Betriebsmittel impermeabel.

Die Membran 8 weist wenigstens einen ersten Bereich 10 und einen zweiten Bereich 11 auf. Der erste Bereich 10 ist beabstandet von der Entnahmestelle und mithin der Betriebsmittelfördereinrichtung 9 angeordnet, während der zweite Bereich 11 an der Entnahmestelle beziehungsweise der Betriebsmittelfördereinrichtung 9 vorliegt. Anders ausgedrückt ist der erste Bereich 10 der Membran 8 weiter von der Entnahmestelle beziehungsweise der Betriebsmittelfördereinrichtung 9 entfernt als der zweite Bereich 11. Der zweite Bereich 11 ist nun ortsfest in dem Behältergehäuse 2 angeordnet, insbesondere ist er an dem Gehäuseboden 3 des Behältergehäuses 2 befestigt. Dies kann beispielsweise durch Verklemmen zwischen der Betriebsmittelfördereinrichtung 9 und dem Gehäuseboden 3 erfolgen, wie vorstehend bereits erläutert.

Der erste Bereich 10 der Membran 8 ist dagegen bezüglich des zweiten Bereichs 11 und mithin bezüglich der Entnahmestelle beziehungsweise der Betriebsmittelfördereinrichtung 9 verlagerbar. Der erste Bereich 10 ist beispielsweise von einem durchgehenden Außenrand 12 der Membran 8 gebildet, welcher vorzugsweise durchgehend in einer gedachten Ebene liegt. Dieser Außenrand 12 ist nun beispielsweise verlagerbar an der Seitenwand 4 beziehungsweise den Seitenwänden 4 gelagert. Die Verlagerung des Außenrands 12 kann dabei mittels eines elektrisch angetriebenen Spindeltriebs bewirkt werden, welcher eine hier nicht dargestellte Antriebseinrichtung für den Außenrand 12 der Membran 8 bildet.

Mithilfe der Antriebseinrichtung ist der erste Bereich 10 beziehungsweise der Außenrand 12 in unterschiedlichen Stellungen anordenbar, insbesondere in einer ersten Stellung und einer zweiten Stellung. In der ersten Stellung liegt dabei der Außenrand 12 beziehungsweise die gedachte Ebene näher an der Entnahmestelle beziehungsweise der Betriebsmittelfördereinrichtung 9 als in der zweiten Stellung. Anders ausgedrückt ist der Außenrand 12 in der zweiten Stellung näher an dem Gehäusedach 5 angeordnet als in der ersten Stellung. Entsprechend ist das Behältervolumen 6 in der ersten Stellung größer als in der zweiten Stellung.

Die Figur 2 zeigt eine schematische Querschnittsdarstellung des vorstehend bereits beschriebenen Betriebsmittelbehälters 1, wobei der erste Bereich 10 in der zweiten Stellung angeordnet ist. Es wird deutlich, dass die Membran 8 trichterartig angeordnet ist, wobei die Entnahmestelle beziehungsweise die Betriebsmittelfördereinrichtung 9 an einem geodätisch am tiefsten liegenden Punkt des Behälterbodens 7 beziehungsweise der Membran 8 angeordnet ist. Entsprechend wird auf das in den Betriebsmittelbehältern 1 beziehungsweise dem Behältervolumen 6 befindliche Betriebsmittel eine schwerkraftbedingte Förderwirkung in Richtung der Entnahmestelle ausgeübt, welche insbesondere größer ist als in der ersten Stellung.

Beispielsweise wird der erste Bereich 10 umso weiter aus der ersten Stellung in Richtung der zweiten Stellung und schlussendlich in diese hinein verlagert, je kleiner die in dem Behältervolumen 6 befindliche Betriebsmittelmenge ist und/oder je größer eine Neigung des Kraftfahrzeugs beziehungsweise des Betriebsmittelbehälters 1 ist. Auf diese Art und Weise kann bei unterschiedlichen Füllständen des Betriebsmittelbehälters 1 und/oder bei unterschiedlichen Anordnungen stets eine zuverlässige Förderung des Betriebsmittels aus dem Betriebsmittelbehälter 1 sichergestellt werden.

## Patentansprüche

1. Betriebsmittelbehälter (1) für ein Kraftfahrzeug zur Zwischenspeicherung eines flüssigen Betriebsmittels, der ein von einem Behältergehäuse (2) begrenztes, der Aufnahme des Betriebsmittels dienendes Behältervolumen (6) und eine Entnahmestelle zur Entnahme des Betriebsmittels aus dem Betriebsmittelbehälter (1) aufweist, wobei das Behältergehäuse (2) einen Gehäuseboden (3), Seitenwände (4) und ein Gehäusedach (5) aufweist, und wobei die Entnahmestelle an einem das Behältervolumen (6) gemeinsam mit dem Behältergehäuse (2) begrenzenden Behälterboden (7) des Betriebsmittelbehälters (1) angeordnet ist, und wobei der Behälterboden (7) wenigstens bereichsweise von einer in dem Behältergehäuse (2) angeordneten, flexiblen und für das Betriebsmittel impermeablen Membran (8) gebildet ist, **wobei** ein von der Entnahmestelle beabstandeter erster Bereich (10) der Membran (8) gegenüber einem an der Entnahmestelle ortsfest bezüglich des Behältergehäuses (2) angeordneten zweiten Bereich (11) der Membran (8) verlagerbar ist, **dadurch gekennzeichnet, dass** zur Verlagerung des ersten Bereichs (10) der Membran (8) eine elektrisch betriebene Antriebseinrichtung vorliegt.

2. Betriebsmittelbehälter nach Anspruch 1, **dadurch gekennzeichnet, dass** der zweite Bereich (11) der Membran (8) die Entnahmestelle einfasst und den geodätisch am tiefsten liegenden Bereich des Behälterbodens (7) bildet.

3. Betriebsmittelbehälter nach einem der vorhergehenden Ansprüche, **dadurch gekennzeichnet, dass** der zweite Bereich (11) der Membran (8) an einem Gehäuseboden (3) des Behältergehäuses (2) befestigt ist.

4. Betriebsmittelbehälter nach einem der vorhergehenden Ansprüche, **dadurch gekennzeichnet, dass** der erste Bereich (10) der Membran (8) bezüglich des Behältergehäuses (2) verlagerbar ist, insbesondere verlagerbar an einer Seitenwand (4) des Behältergehäuses (2) gelagert ist.

5. Betriebsmittelbehälter nach einem der vorhergehenden Ansprüche, **dadurch gekennzeichnet, dass** die elektrisch angetriebene Antriebseinrichtung als Spindeltrieb vorliegt.

6. Betriebsmittelbehälter nach einem der vorhergehenden Ansprüche, **dadurch gekennzeichnet, dass** ein von der Entnahmestelle beabstandeter, durchgehender Außenrand (12) der Membran (8) den ersten Bereich (10) der Membran (8) bildet.

7. Betriebsmittelbehälter nach einem der vorhergehenden Ansprüche, **dadurch gekennzeichnet, dass** der Außenrand (12) durchgehend in einer gedachten Ebene liegt, die in einer ersten Stellung des ersten Bereichs (10) einen ersten Abstand von der Entnahmestelle und in einer zweiten Stellung einen größeren zweiten Abstand aufweist.

8. Betriebsmittelbehälter nach einem der vorhergehenden Ansprüche, **dadurch gekennzeichnet, dass** das Behältervolumen (6) in der ersten Stellung größer ist als in der zweiten Stellung.

9. Verfahren zum Betreiben eines Betriebsmittelbehälters (1) für ein Kraftfahrzeug zur Zwischenspeicherung eines flüssigen Betriebsmittels, insbesondere eines Betriebsmittelbehälters (1) nach einem oder mehreren der vorhergehenden Ansprüche, wobei der Betriebsmittelbehälter (1) ein von einem Behältergehäuse (2) begrenztes, der Aufnahme des Betriebsmittels dienendes Behältervolumen (6) und eine Entnahmestelle zur Entnahme des Betriebsmittels aus dem Betriebsmittelbehälter (1) aufweist, wobei das Behältergehäuse (2) einen Gehäuseboden (3), Seitenwände (4) und ein Gehäusedach (5) aufweist, und wobei die Entnahmestelle an einem das Behältervolumen (6) gemeinsam mit dem Behältergehäuse (2) begrenzenden Behälterboden (7) des Betriebsmittelbehälters (1) angeordnet ist, und wobei der Behälterboden (7) wenigstens bereichsweise von einer in dem Behältergehäuse (2) angeordneten, flexiblen Membran (8) gebildet ist, **wobei** ein von der Entnahmestelle beabstandeter erster Bereich (10) der Membran (8) gegenüber einem an der Entnahmestelle ortsfest bezüglich des Behältergehäuses (2) angeordneten zweiten Bereich (11) der Membran (8) verlagert werden kann, **dadurch gekennzeichnet, dass** zur Verlagerung des ersten Bereichs (10) der Membran (8) eine elektrisch betriebene Antriebseinrichtung vorliegt.

## Claims

1. Operating resource container (1) for a motor vehicle for intermediate storage of a liquid operating resource, which has a container volume (6) delimited by a container housing (2), which serves for receiving the operating resource, and a removal point for removing the operating resource from the operating resource container (1), wherein the container housing (2) has a housing base (3), side walls (4) and a housing roof (5), and wherein the removal point is arranged on a container base (7) of the operating resource container (1) delimiting the container volume (6) together with the container housing (2), and wherein the container base (7) is formed at least in regions by a membrane (8), arranged in the container housing (2) which is flexible and impermeable for the operating resource, **wherein** a first region (10) of the membrane (8) spaced apart from the removal point can be displaced relative to a second region (11) of the membrane (8) arranged at the removal point fixed with respect to the container housing (2), **characterised in that** an electrically-operated drive device is present for the displacement of the first region (10) of the membrane (8).

2. Operating resource container according to Claim 1, **characterised in that** the second region (11) of the membrane (8) encloses the removal point and forms the geodetically lowest lying region of the container base (7).

3. Operating resource container according to any one of the preceding claims, **characterised in that** the second region (11) of the membrane (8) is fastened to a housing base (3) of the container housing (2).

4. Operating resource container according to any one of the preceding claims, **characterised in that** the first region (10) of the membrane (8) can be displaced with respect to the container housing (2), in particular is displaceably mounted on a side wall (4) of the container housing (2).

5. Operating resource container according to any one of the preceding claims, **characterised in that** the electrically-driven drive device is present in the form of a spindle drive.

6. Operating resource container according to any one of the preceding claims, **characterised in that** a continuous outer edge (12) of the membrane (8), which is spaced apart from the removal point, forms the first region (10) of the membrane (8).

7. Operating resource container according to any one of the preceding claims, **characterised in that** the outer edge (12) lies continuously in an imaginary plane, which in a first position of the first region (10) has a first distance from the removal point and in a second position a larger second distance.

8. Operating resource container according to any one of the preceding claims, **characterised in that** the container volume (6) in the first position is larger than in the second position.

9. Method for operating an operating resource container (1) for a motor vehicle for intermediate storage of a liquid operating resource, in particular an operating resource container (1) according to any one or several of the preceding claims, wherein the operating resource container (1) has a container volume (6) delimited by a container housing (2), which serves for receiving the operating resource, and a removal point for removing the operating resource from the operating resource container (1), wherein the container housing (2) has a housing base (3), side walls (4) and a housing roof (5), and wherein the removal point is arranged on a container base (7) of the operating resource container (1) delimiting the container volume (6) together with the container housing (2), and wherein the container base (7) is formed at least in regions by a flexible membrane (8), arranged in the container housing (2), **wherein** a first region (10) of the membrane (8) spaced apart from the removal point can be displaced relative to a second region (11) of the membrane (8) arranged at the removal point fixed with respect to the container housing (2), **characterised in that** an electrically-operated drive device is present for the displacement of the first region (10) of the membrane (8).

## Revendications

1. Réservoir de carburant (1) pour un véhicule automobile pour le stockage intermédiaire d'un carburant liquide, qui présente un volume de réservoir (6) limité par un boîtier de réservoir (2), servant à la réception du carburant, et un point de prélèvement pour le prélèvement du carburant du réservoir de carburant (1), dans lequel le boîtier de réservoir (2) présente un fond de boîtier (3), des parois latérales (4) et un toit de boîtier (5), et dans lequel le point de prélèvement est agencé au niveau d'un fond de réservoir (7) du réservoir de carburant (1) limitant le volume de réservoir (6) conjointement avec le boîtier de réservoir (2), et dans lequel le fond de réservoir (7) est formé au moins par zone par une membrane (8) imperméable au carburant, souple, agencée dans le boîtier de réservoir (2), **dans lequel** une première zone (10) de la membrane (8) espacée du point de prélèvement est déplaçable par rapport à une deuxième zone (11) de la membrane (8) agencée au niveau du point de prélèvement de manière fixe par rapport au boîtier de réservoir (2), **caractérisé en ce qu'**est présent un dispositif de propulsion à fonctionnement électrique pour le déplacement de la première zone (10) de la membrane (8).

2. Réservoir de carburant selon la revendication 1, **caractérisé en ce que** la deuxième zone (11) de la membrane (8) encadre le point de prélèvement et forme la zone du fond de réservoir (7) la plus basse du point de vue géodésique.

3. Réservoir de carburant selon l'une quelconque des revendications précédentes, **caractérisé en ce que** la deuxième zone (11) de la membrane (8) est fixée au niveau d'un fond de boîtier (3) du boîtier de réservoir (2).

4. Réservoir de carburant selon l'une quelconque des revendications précédentes, **caractérisé en ce que** la première zone (10) de la membrane (8) est déplaçable par rapport au boîtier de réservoir (2), en particulier est logée de manière déplaçable au niveau d'une paroi latérale (4) du boîtier de réservoir (2).

5. Réservoir de carburant selon l'une quelconque des revendications précédentes, **caractérisé en ce que** le dispositif de propulsion à entraînement électrique est présent en tant que mécanisme à broche.

6. Réservoir de carburant selon l'une quelconque des revendications précédentes, **caractérisé en ce qu'**un bord extérieur (12) continu de la membrane (8) espacé du point de prélèvement forme la première zone (10) de la membrane (8).

7. Réservoir de carburant selon l'une quelconque des revendications précédentes, **caractérisé en ce que** le bord extérieur (12) se trouve en continu dans un plan imaginaire, qui présente dans une première position de la première zone (10) une première distance par rapport au point de prélèvement et dans une deuxième position une plus grande deuxième distance.

8. Réservoir de carburant selon l'une quelconque des revendications précédentes, **caractérisé en ce que** le volume de réservoir (6) dans la première position est plus grand que dans la deuxième position.

9. Procédé de fonctionnement d'un réservoir de carburant (1) pour un véhicule automobile pour le stockage intermédiaire d'un carburant liquide, en particulier d'un réservoir de carburant (1) selon une ou plusieurs des revendications précédentes, dans lequel le réservoir de carburant (1) présente un volume de réservoir (6) limité par un boîtier de réservoir (2), servant à la réception du carburant, et un point de prélèvement pour le prélèvement du carburant du réservoir de carburant (1), dans lequel le boîtier de réservoir (2) présente un fond de boîtier (3), des parois latérales (4) et un toit de boîtier (5), et dans lequel le point de prélèvement est agencé au niveau d'un fond de réservoir (7) du réservoir de carburant (1) limitant le volume de réservoir (6) conjointement avec le boîtier de réservoir (2), et dans lequel le fond de réservoir (7) est formé au moins par zone par une membrane (8) souple, agencée dans le boîtier de réservoir (2), **dans lequel** une première zone (10) de la membrane (8) espacée du point de prélèvement peut être déplacée par rapport à une deuxième zone (11) de la membrane (8) agencée au niveau du point de prélèvement de manière fixe par rapport au boîtier de réservoir (2), **caractérisé en ce qu'**est présent un dispositif de propulsion à fonctionnement électrique pour le déplacement de la première zone (10) de la membrane (8).
